# EUROPÄISCHE PATENTANMELDUNG

(11) **EP 1 601 210 A1**
(43) Veröffentlichungstag der Anmeldung: **30.11.2005**
(21) Anmeldenummer: 05011413.1
(22) Anmeldetag: 26.05.2005
(51) Int. Cl.: H04N 9/31, H04N 5/74, G03B 21/28, G03B 37/00, G03B 35/26

(54) **Panorama-Bildprojektor**

(30) Priorität: 27.05.2004 DE 102004027340
(71) Anmelder: Deutsches Zentrum für Luft- und Raumfahrt e.V, 53127 Bonn (DE)
(72) Erfinder: Eckardt, Andreas, Dr., 12524 Berlin (DE); Hirzinger, Gerhard, Prof., Dr., 82229 Seefeld (DE)
(74) Vertreter: Zucker, Volker

(57) **Zusammenfassung**

Die Erfindung betrifft ein Panorama-Bildprojektor (1), umfassend einen Projektor und eine Datenquelle, wobei der Projektor mindestens eine Lichtquelle, eine Einrichtung zur Erzeugung eines zeilenförmigen RGB-Bildes und eine Projektionsoptik (4) umfasst, und die Daten eines Panoramabildes zeilenförmig als R-, G- und B-Bild in der Datenquelle abgespeichert sind, wobei die Lichtquelle aus mindestens drei Lasern ausgebildet ist, die im R-, G- und B-Bereich des Spektrums emittieren, wobei der Projektor synchronisiert zur Zeilenfrequenz der Datenquelle rotierbar antreibbar ist oder die Projektionsoptik (4) den zeilenförmigen Ausschnitt auf mindestens einen Spiegel (6) abbildet und der Spiegel (6) synchronisiert zur Zeilenfrequenz der Datenquelle rotierbar antreibbar ist.

## Beschreibung

Die Erfindung betrifft einen Panorama-Bildprojektor gemäß dem Oberbegriff des Anspruchs 1.

Zur plastischen Aufnahme, insbesondere von größeren Objekten wie beispielsweise Gebäuden oder größeren Räumen, sind so genannte Panorama-Kameras bekannt. Aufgrund einer gewünschten hohen Auflösung der Bilder ist es dabei bekannt, eine CCD- oder CMOS-Zeilenkamera zu dem Objekt auszurichten und das PanoramaBild zeilenförmig aufzunehmen, indem die Kamera definiert geschwenkt wird. Die einzelnen zeilenförmigen Bilder werden dann gematcht und gegebenenfalls einer Koordinatentransformation unterzogen. Zur Wiedergabe dieser aufgenommenen Panorama-Bilder auf eine beispielsweise zylindrische Leinwand ist es bekannt, mehrere sich überlappende LCD-Projektoren zu benutzen, die kreisförmig angeordnet werden und jeweils von einem eigenen Rechner angesteuert werden.
Die Rechner sind untereinander vernetzt und die Projektoren untereinander kalibriert. Die Bilder werden mit Hilfe von Kalibrationsfiles derart modifiziert, so dass man in der kreisförmigen Abbildung Zylinderkoordinaten erhält. Je nach benötigter geometrischer Auflösung des Systems müssen eine entsprechende Anzahl Projektoren eingesetzt werden, was relativ teuer ist.

Der Erfindung liegt daher das technische Problem zugrunde, einen Panorama-Bildprojektor zu schaffen, der einfacher und kostengünstiger im Aufbau ist.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu ist die Lichtquelle aus mindestens drei Lasern ausgebildet, die im R-, G- und B-Bereich des Spektrums emittieren, wobei der Projektor synchronisiert zur Zeilenfrequenz der Datenquelle rotierbar antreibbar ist oder die Projektionsoptik den zeilenförrmigen Ausschnitt auf mindestens einen Spiegel abbildet und der Spiegel synchronisiert zur Zeilenfrequenz der Datenquelle rotierbar antreibbar ist. Die Zeilenfrequenz ist dabei die Frequenz, mit der die zeilenförmigen RGB-Bilder aus der Datenbasis ausgelesen werden. Durch die Anordnung werden im Wesentlichen zwei Vorteile erreicht. Zum einen entfällt ein Umrechnen der Panoramabilder mittels der Kalibrationsfiles und zum anderen ist mittels der Laser eine ausreichende Strahlungsleistungsdichte bei hoher Auflösung gegeben. Des Weiteren ist auch nur ein Projektor notwendig. Wird nun die Rotationsgeschwindigkeit ausreichend hoch gewählt, so nimmt der Betrachter aufgrund der Trägheit des menschlichen Auges ein stehendes Bild wahr. Hierzu wird beispielsweise der Spiegel oder Projektor mit einer Frequenz von größer/gleich 25 Hz gedreht. Sollen nur Halbräume beleuchtet werden, so kann durch geeignete Maßnahmen die notwendige Frequenz halbiert werden. Der Vorteil des rotierbaren Spiegels gegenüber dem rotierenden Projektor ist, dass geringere Massen bewegt werden müssen.

Zur Erzeugung der RGB-Zeilen auf der Leinwand stehen nun verschiedene Ansätze zur Verfügung. Zum einen können die Laser als Laser-Dioden-Zeilen ausgebildet sein. In diesem Fall wird die Längsausdehnung der Zeile also schon durch die Lichtquelle erzeugt.

In einer alternativen Ausführungsform sind die Laser hingegen als punktförmige Laser ausgebildet, deren eine Einrichtung zur zeilenförmigen Aufweitung der punktförmigen Strahlung zugeordnet ist. Dies kann beispielsweise eine Zylinderlinse sein, die die punktförmige Quelle auf einen Streifen abbildet. In diesem Fall muss dann die Modulation der einzelnen Punkte in einer nachfolgenden Einrichtung vorgenommen werden. Theoretisch ist auch denkbar, die punktförmigen Laser über die Zeile zu scannen und dabei je nach Vorgabe-Werte aus der Datenbasis die Strahlungsleistungsdichte zu modulieren. Ebenso kann die Laser-Dioden-Zeile in ihrer Strahlungsleistungsdichte moduliert werden.

In einer bevorzugten Ausführungsform werden dem Laser steuerbare Lichtvorteile zugeordnet, mittels derer die Lichtleistung modulierbar ist, wobei die Lichtventile zur Zeilenfrequenz synchronisiert ansteuerbar sind. Hierzu sind die Lichtventile beispielsweise als piezogesteuerte Shutter-Klappen ausgebildet, die je nach Shutter-Klappenstellung mehr oder weniger Strahlungsleistung passieren lassen.

Dabei kann auch vorgesehen sein, dass die Shutter-Klappe nur in zwei Stellungen bewegt wird. Die Shutter-Klappe ist hierzu beispielsweise als Mikro-Spiegel mit zugeordnetem Piezo-Element ausgebildet, wobei beispielsweise in einer Grundstellung der Spiegel im Winkel von 45° zum Laserstrahl ausgerichtet ist und der vom Spiegel reflektierte Strahl in die Faser eingekoppelt wird. In einer zweiten Stellung wird dann der Spiegel beispielsweise in einem Winkel von 0° bewegt, wobei dann der Laserstrahl in eine Lichtfalle abgestrahlt wird. Die Farbmodulation kann dann dadurch erfolgen, dass die Piezo-Elemente mit einer sehr hohen Frequenz angesteuert werden, die weit oberhalb der menschlichen Wahrnehmbarkeit von ca. 25 Hz liegt. Handelsübliche Piezo-Elemente sind dabei beispielsweise mit ca. 100 kHz ansteuerbar. Je nachdem wie oft und/oder wie lange dann die Shutter-Klappe geöffnet bzw. geschlossen wird, kann die Intensität der einzelnen Farben moduliert werden, so dass durch die Kombination aller drei Farben ein gewünschter Farbton für ein Pixel generiert wird. Dieses Prinzip kann sowohl bei Ausführungsformen Anwendung finden, wo die Lichtventile am Laser angeordnet sind, als auch bei Anordnung im optischen Interface. Wie bereits ausgeführt, erfolgt die Mischung der drei Farben R, G und B hinter den Lichtventilen für jeden Bildpunkt. Bei der Modulation am Laser ist gegebenenfalls noch eine Optik notwendig, um die drei Laserstrahlen in die Faser einzukoppeln. Wie bereits zur Modulation der einzelnen Farben erläutert, können aufgrund der Trägheit des menschlichen Auges die drei Farben gleichzeitig oder nacheinander in die Faser eingekoppelt werden, wenn die Frequenzen nur ausreichend hoch sind.

Allgemein sind die Lichtventile vorzugsweise als piezogesteuerte Mikrospiegel ausgebildet, die weiter vorzugsweise mit einer Frequenz größer 100 Hz angesteuert werden.

In einer weiteren bevorzugten Ausführungsform umfasst die Datenbasis der Datenquelle das Panoramabild zeilenweise aus unterschiedlichen Blickwinkeln, die synchronisiert nacheinander oder mit unterschiedlichen Polarisationsgraden gleichzeitig oder nacheinander abbildbar sind. Hierdurch kann für den Betrachter ein stereoförmiges Panoramabild erzeugt werden. Hierzu werden beispielsweise die beiden Zeilen mit den unterschiedlichen Polarisationsgraden durch zwei Projektoren gleichzeitig abgebildet. Setzt sich nun der Betrachter eine Polarisationsbrille auf, wobei der Polarisationsfilter des linken Auges auf den Polarisationsgrad der ersten Zeile und der Polarisationsfilter des rechten Auges auf den Polarisationsgrad der zweiten Zeile abgestimmt ist, so nimmt der Betrachter ein stereoförmiges Bild wahr. Der gleiche Effekt kann erzielt werden, wenn die beiden Zeilen schnell hintereinander projiziert werden und der Betrachter eine Shutter-Brille aufsetzt, wobei bei der ersten Zeile die eine Hälfte der Brille und anschließend bei der zweiten Zeile der andere Teil der Brille transparent geschaltet wird.

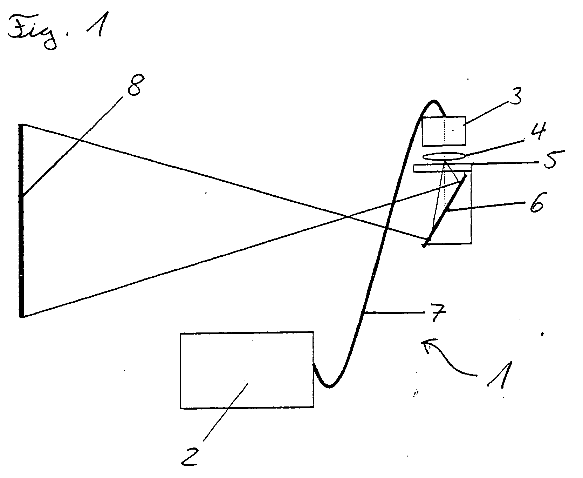

Die Erfindung wird nachfolgend anhand eines bevorzugten Ausführungsbeispieles näher erläutert. Die einzige Figur zeigt ein schematisches Blockschaltbild des Panorama-Bildprojektors.

Der Panorama-Bildprojektor 1 umfasst eine Laserquelle 2, ein optisches Interface 3, eine Abbildungsoptik 4 und einen durch einen Motor 5 rotierbar antreibbaren Spiegel 6. Die Laserquelle 2 ist dabei über mindestens eine Glasfaser 7 mit dem optischen Interface 3 verbunden. Je nach Ort der Modulation ist dabei die Glasfaser 7 als einfache Glasfaser oder als Bildwellenleiter ausgebildet. Bei einem Bildwellenleiter existiert eine eindeutige Zuordnung der Lichtwellenleiter, d.h. die Position jedes Lichtwellenleiters an der gegenüberliegenden Stirnseite ist bekannt. Die Verwendung eines Bildwellenleiters ist stets dann erforderlich, wenn die Modulation der Strahlungsleistungsdichte bei der Laserquelle vorgenommen wird.

Nachfolgend soll davon ausgegangen werden, dass die Modulation im optischen Interface 3 vorgenommen wird. In diesem Fall übertragen drei punktförmige Laser die Farben R, G und B über separate Lichtwellenleiter an das optische Interface 3. Dort werden zunächst die drei punktförmigen Laserlichtpunkte streifenförmig aufgeweitet. Dies kann beispielsweise durch eine Zylinderlinse erfolgen oder aber auch durch einen Querschnittswandler. Querschnittswandler sind Lichtwellenleiter mit unterschiedlichen Querschnitten an den beiden Stirnseiten. Anschließend werden die drei zeilenförmigen Farben R, G und B moduliert. Hierzu wird beispielsweise der unmodulierte Farbstreifen auf ein streifenförmiges Lichtventil abgebildet, wobei das Lichtventil in zweifacher Hinsicht auf die gewünschte Auflösung abgestimmt sein muss. Für die räumliche Auflösung muss eine entsprechende Anzahl von Lichtventilen pro Längeneinheit vorhanden sein, wobei für die spektrale Auflösung die Steuerung des Lichtventils entsprechend fein abgestuft möglich sein muss. Hierzu eignen sich beispielsweise piezogesteuerte Shutter-Klappen, die ausreichend schnell und abgestuft ansteuerbar sind. Dazu liest nun das optische Interface 3 eine Zeile aus der nicht dargestellten Datenbasis aus. Entsprechend der Werte für R, G und B je Bildpunkt werden nun die einzelnen Shutter-Klappen parallel angesteuert, so dass die transmittierte Strahlungsleistungsdichte für jede Farbe für jeden Bildpunkt eingestellt wird. Hinter den Lichtventilen werden dann die drei farbigen Lichtstreifen zu einem Lichtstreifen zusammengefügt. Dieser zusammengefügte Lichtstreifen wird von der Abbildungsoptik 4 auf den Spiegel 6 abgebildet und von dort auf eine beispielsweise zylindrische Leinwand 8 abgebildet. Durch die Drehung des Spiegels und das synchron zur Drehung erfolgende Auslesen weiterer Zeilenbilder wird so ein Panoramabild auf der Leinwand 8 abgebildet. Zur Erhöhung der Strahlungsleistungsdichte auf der Leinwand 8 bzw. zur Reduzierung der Auslese- bzw. Rotationsfrequenz kann auch parallel mit zwei Panorama-Bildprojekten gearbeitet werden, die beispielsweise auf einen gemeinsamen quaderförmigen Spiegel abbilden. Des Weiteren kann die Verwendung zweier Panorama-Bildprojektoren dazu genutzt werden, ein Stereo-Panoramabild zu erzeugen, wenn die beiden Panorama-Bildprojektoren das gleiche Panoramabild aus unterschiedlichen Blickwinkeln aufgenommen auf die Leinwand projizieren. Um dann für den Betrachter den Stereo-Effekt zu erreichen, muss dieser eine Shutter- oder Polarisationsfilter-Brille aufsetzen, wobei dann die beiden Bilder nacheinander projiziert werden und die linke und rechte Brillenhälfte synchron hierzu transparent geschaltet werden und aber die beiden Bilder unterschiedlich polarisiert werden.

## Patentansprüche

1. Panorama-Bildprojektor, umfassend einen Projektor und eine Datenquelle, wobei der Projektor mindestens eine Lichtquelle, eine Einrichtung zur Erzeugung eines zeilenförmigen RGB-Bildes und eine Projektionsoptik umfasst, und die Daten eines Panoramabildes zeilenförmig als R-, G- und B-Bild in der Datenquelle abgespeichert sind,
**dadurch gekennzeichnet**, das
die Lichtquelle aus mindestens drei Lasern ausgebildet ist, die im R-, G- und B-Bereich des Spektrums emittieren, wobei der Projektor synchronisiert zur Zeilenfrequenz der Datenquelle rotierbar antreibbar ist oder die Projektionsoptik (4) den zeilenförmigen Ausschnitt auf mindestens einen Spiegel (6) abbildet und der Spiegel (6) synchronisiert zur Zeilenfrequenz der Datenquelle rotierbar antreibbar ist.

2. Panorama-Bildprojektor nach Anspruch 1, **dadurch gekennzeichnet, dass** die Laser als Laser-Dioden-Zeilen ausgebildet sind.

3. Panorama-Bildprojektor nach Anspruch 1, **dadurch gekennzeichnet, dass** die Laser als punktförmige Laser ausgebildet sind, denen eine Einrichtung zur zeilenförmigen Aufweitung der punktförmigen Strahlung zugeordnet ist.

4. Panorama-Bildprojektor nach einem der vorangegangenen Ansprüche,
**dadurch gekennzeichnet, dass** die Laser in ihrer Lichtleistung modulierbar ausgebildet sind.

5. Panorama-Bildprojektor nach einem der vorangegangenen Ansprüche,
**dadurch gekennzeichnet, dass** den Lasern steuerbare Lichtventile zugeordnet sind, mittels derer die Lichtleistung modulierbar ist, wobei die Lichtventile zur Zeilenfrequenz synchronisiert ansteuerbar sind.

6. Panorama-Bildprojektor nach Anspruch 5, **dadurch gekennzeichnet, dass** die Lichtventile als piezogesteuerte Shutter-Klappen ausgebildet sind.

7. Panorama-Bildprojektor nach Anspruch 6, **dadurch gekennzeichnet, dass** die piezogesteuerten Shutter-Klappen als Mikrospiegel mit zugeordneten Piezoelementen ausgebildet sind.

8. Panorama-Bildprojektor nach einem der Ansprüche 5 bis 7, **dadurch gekennzeichnet, dass** die Lichtventile an den Lasern angeordnet sind.

9. Panorama-Bildprojektor nach einem der Ansprüche 5 bis 8, **dadurch gekennzeichnet, dass** die Lichtventile mit einer Frequenz größer 100 Hz angesteuert werden.

10. Panorama-Bildprojektor nach Anspruch 9, **dadurch gekennzeichnet, dass** die Lichtventile in zwei Stellungen ansteuerbar sind, wobei in einer ersten Stellung das Laserlicht in eine Faser eingekoppelt und in einer zweiten Stellung in eine Lichtfalle gestrahlt wird.

11. Panorama-Bildprojektor nach einem der vorangegangenen Ansprüche,
**dadurch gekennzeichnet, dass** die Datenbasis der Datenquelle das Panoramabild zeilenweise aus unterschiedlichem Blickwinkel umfasst, die synchronisiert nacheinander oder mit unterschiedlichen Polarisationsgraden gleichzeitig abbildbar sind.
